# EUROPEAN PATENT SPECIFICATION

(11) **EP 1 996 842 B1**
(45) Date of publication and mention of the grant of the patent: **11.04.2012**
(21) Application number: 07705380.9
(22) Date of filing: 15.02.2007
(51) Int. Cl.: F16K 3/32, F16K 11/065, F16K 11/085

(54) **GAS SUPPLY APPARATUS**
GASZUFUHRVORRICHTUNG
APPAREIL D'ALIMENTATION EN GAZ

(30) Priority: 20.03.2006 GB 0605554
(43) Date of publication of application: 03.12.2008
(73) Proprietor: Edwards Limited, Crawley, West Sussex RH10 9LW (GB)
(72) Inventor: NORTH, Phillip, Shoreham By Sea Sussex BN43 6RH (GB); MANSON, David, Paul, Shoreham By Sea Sussex BN43 6RH (GB)
(74) Representative: Clark, Charles Robert
(86) International application number: PCT/GB2007/050067
(87) International publication number: WO 2007/107781

(56) References cited:
- DE-C1- 10 152 186
- GB-A- 845 187
- US-A- 2 278 246
- US-A- 2 855 955
- US-A- 3 678 959

## Description

This invention relates to apparatus for supplying a purge gas to a pumping arrangement.

Vacuum pumping arrangements used to pump fluid from semiconductor tools typically employ, as a backing pump, a multi-stage positive displacement plump employing inter-meshing rotors. The rotors may have the same type of profile in each stage or the profile may change from stage to stage.

During semiconductor processes such as chemical vapour deposition processing, deposition gases are supplied to a process chamber to form a deposition layer on the surface of a substrate As the residence time in the chamber of the deposition gas is relatively short, only a small proportion of the gas supplied to the chamber is consumed during the deposition process. Consequently, unconsumed gas molecules pumped from the chamber by a vacuum pump can pass through the pump in a highly reactive state. As a result, pump components can be subjected to damage due to corrosion and degradation resulting from the pumping of aggressive, unconsumed gas molecules. Furthermore, if the unconsumed process gas or by-product is condensable, sublimation on lower temperature surfaces can result in the accumulation of powder or dust within the pump, which can effectively fill the vacant running clearance between the rotor and stator elements of the pump. Other processes use gases that can result in potentially flammable mixtures forming in the pump.

To dilute these gases as they pass through the pump, an inert purge gas, such as nitrogen, can be supplied to the pump. As this gas can also serve to increase the longevity and effectiveness of dynamic shaft seals of the pump, and can ensure that certain sensors within the pumping arrangement are maintained in a clean and functional state, it is typically supplied through a plurality of purge ports provided at various locations about the pumping arrangement.

To reduce the cost of purge gas consumption, the quantity of purge gas supplied to the pumping arrangement is normally fixed during installation of the pumping arrangement depending on the process application. The quantity of purge gas must be carefully controlled in order to avoid both under-dilution of the process gases, as this could lead to pumping reliability problems, and over-dilution of the process gases, as this could lead to unnecessary costs and loss of pumping performance.

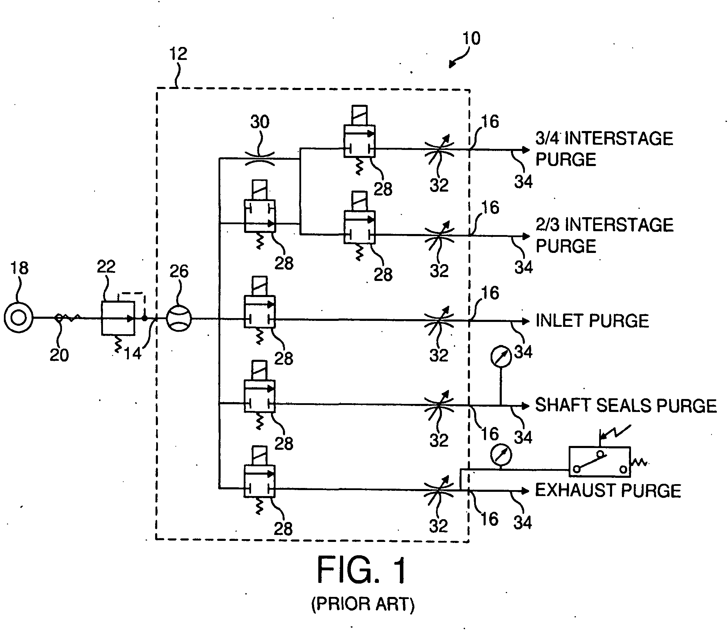

Figure 1 illustrates a typical system for supplying purge gas to a number of purge ports. The system 10 comprises a manifold 12 having an inlet 14 and a plurality of outlets 16. The inlet 14 is connected to a source 18 of purge gas, such as nitrogen or argon, via a conduit 20, which includes a check valve 22. As the pressure of the purge gas at the source 18 may be variable, for example, within the range from 137895.14 to 689475.7 Pa (20 to 100 psi), the conduit 20 also includes a pressure regulator 24 for adjusting the pressure of the stream of purge gas conveyed to the inlet 14.

Within the manifold 12, the received stream of purge gas passes through a mass flow transducer 26 before being split into a plurality of streams for conveyance to the outlets 16. As the flow requirement at each outlet 16 may be different, depending on the purpose for which the purge gas is being supplied to a particular purge port of the pumping arrangement, the manifold 16 contains a relatively complex and expensive arrangement of solenoid valves 28, fixed flow restrictors 30 and variable flow restrictors, for example needle valves, 32 for fixing the flow rate of each stream of purge gas supplied to an outlet 16.

DE10152186 discloses apparatus for the metered supply of oxygen-containing mediums in a gas production system, the apparatus comprising: a manifold block having a gas inlet and a plurality of gas outlets; and a cylindrical tube located between the inlet and the outlets, comprising a plurality of spaced apertures comprising a single axial inlet aperture aligned with the gas inlet and a plurality of outlet apertures of various sizes which can be aligned with the gas outlets. The tube is moveable relative to the manifold from one position in which a first set of the outlet apertures is aligned with the outlets to another position in which a second set of the outlet apertures is aligned with the outlets to vary the flow rate of gas from the tube.

The present invention provides apparatus for supplying a purge gas to a pumping arrangement, the apparatus comprising a manifold having a gas inlet and a plurality of gas outlets each for supplying gas to a respective port of the pumping arrangement, and a flow selector located between the inlet and the outlets, the flow selector comprising a plurality of spaced apertures comprising a plurality of inlet apertures of various sizes which can be aligned with the gas inlet and a plurality of outlet apertures of various sizes which can be aligned with the gas outlets, the apertures being located so that the inlet apertures are spaced from the outlet apertures to form a plurality of aperture sets each comprising a said inlet aperture and a plurality of outlet apertures, the flow selector being moveable relative to the manifold from one position in which a first set of the apertures is aligned with the inlet and the outlets to another position in which a second set of the apertures is aligned with the inlet and the outlets to vary the flow rate of gas into and from the flow selector.

This can enable the required flow rate of gas to each of the ports of the pumping arrangement to be quickly and easily selected by the correct location of the flow selector within the manifold so that the appropriate set of apertures of the flow selector is aligned with the inlet and the outlets of the manifold.

When the flow selector is adjusted to change the flow rate of purge gas from the manifold, a different aperture becomes aligned with the inlet of the manifold to adjust the rate of flow of purge gas into the flow selector. This can both ensure that the flow of purge gas into the flow selector is appropriate for the required flow rate of purge gas from the selector, thereby avoiding throttling of the purge gas flow, and enable the purge gas flow rate to be monitored by achieving a measurable pressure drop across the aperture aligned with the inlet of the manifold.

Each set of apertures preferably comprises an inlet aperture for alignment with the inlet and a plurality of outlet apertures each for alignment with a respective outlet, with the outlet apertures being axially aligned. The inlet aperture may be axially aligned with the outlet apertures, or it may be angularly spaced from the outlet apertures. In one embodiment, the gas inlet is located on the opposite side of the manifold to the gas outlets. The inlet aperture is preferably located towards one end of the flow selector.

The outlet apertures of a set may have the same or various sizes. For example, each set may comprises three or more outlet apertures, and some of these outlet apertures may have the same size, or they may all have different sizes depending on the required gas flow rates to the ports of the pumping arrangement. The inlet apertures of the flow selector preferably have different sizes, so that, for example, when the overall flow rate of gas from the manifold is to be reduced, a smaller inlet aperture is aligned with the inlet of the manifold.

The flow selector may be rotatably and/or axially moveable relative to the manifold. In one embodiment, the flow selector is rotatable relative to the manifold, and so the first set of apertures is angularly spaced from the second set of apertures. In another embodiment, the flow selector is axially moveable relative to the manifold, with the sets of apertures being axially spaced. Alternatively, the sets of apertures may be both radially and axially spaced. In one embodiment, the flow selector is hollow, and preferably comprises a tubular member which is at least rotatable relative to the manifold to adjust the position of the flow selector within the manifold. The sets of apertures may be spaced by any angle depending on the number of sets of apertures located on the flow selector. For example, the sets may be spaced by a quarter turn of the flow selector. In other embodiment, the flow selector is a plate what is axially moveable relative to the manifold to adjust the position of the flow selector within the manifold. In this embodiment, the apertures are axially spaced

The flow selector may be located wholly within the manifold. In the preferred embodiments, one end of the flow selector is located in the manifold, and the other end of the flow selector is external of the manifold. Part of the flow selector is preferably spaced from the manifold, so that the space between the flow restrictor and the manifold can provide a measurement point for determining the pressure drop across the inlet aperture. A second measurement point may be conveniently located in the inlet of the gas manifold. The external end of the flow selector may provide a handle to enable a user to manually adjust the position of the flow selector.

Preferred features of the present invention will now be described, by way of example only, with reference to the accompanying drawings, in which:
Figure 1 illustrates a know system for supplying an inert purge gas to a pump;
Figure 2 illustrates a pumping arrangement having ports connected to an apparatus for supplying purge gas to the pumping arrangement;
Figure 3 illustrates in more detail a first embodiment of the manifold of the apparatus of Figure 2, with part of the wall of the manifold removed to reveal the flow selector; and
Figure 4 is a cross-section through a second embodiment of the manifold of the apparatus of Figure 2.

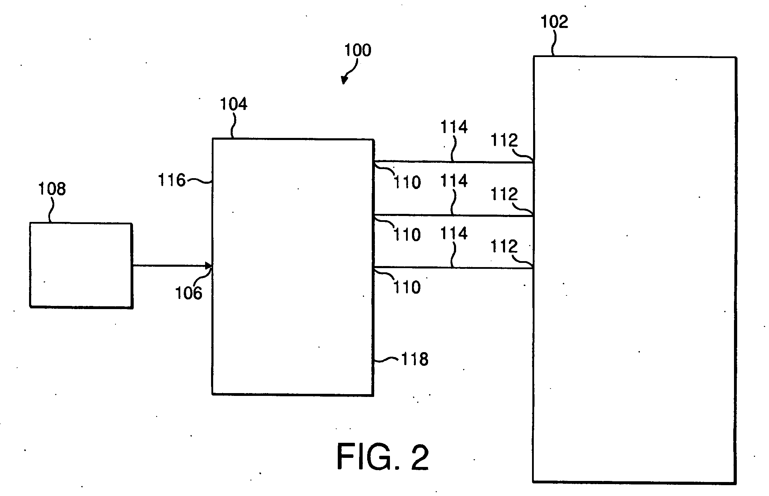

With reference first to Figure 2, apparatus 100 for supplying a purge gas to the pumping arrangement 102 comprises a manifold 104 having a gas inlet 106 for receiving a flow of purge gas from a purge gas supply 108 and a plurality of gas outlets 110 each for supplying purge gas to a respective port 112 of the pumping arrangement 102 via a flow conduit 114. In the illustrated embodiment, the manifold 104 has three gas outlets 110 each connected to the pumping arrangement 102, although the manifold 104 may have more than three gas outlets which can be selectively connected to the pumping arrangement 102 as required. The gas inlet 106 is located on a side wall 116 of the manifold 104, towards one end of the manifold 104, and the gas outlets 110 are located on the opposite side wall 118 of the manifold 104.

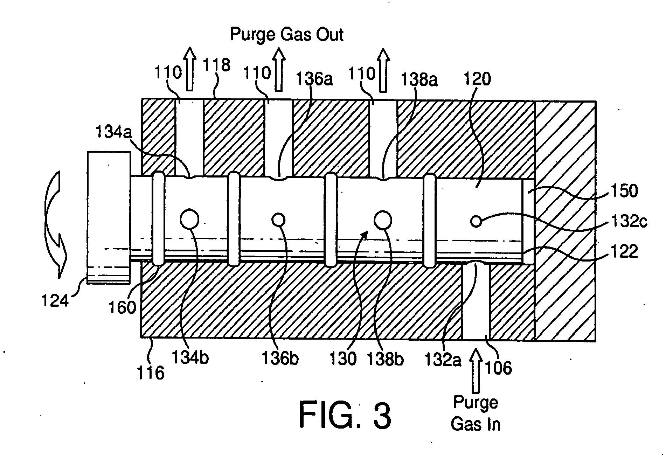

A first embodiment of the manifold 104 is illustrated in more detail in Figure 3. A hollow flow selector 120 is located between the gas inlet 106 and the gas outlets 110, in this embodiment partially within the manifold 104 so that one end 122 of the flow selector 120 is located within the manifold 104 and the other end 124 of the flow selector 120 is external of the manifold 104. In this embodiment, the flow selector 120 is cylindrical, but may adopt any other tubular or hollow shape. Seals 160 are located about the external periphery of the flow selector 120 to isolate the gas inlet 106 and the gas outlets 100 externally of the flow selector 120 so that purge gas flows from the gas inlet 106 to the gas outlets 110 through the flow selector 120.

The flow selector 120 is moveable relative to the manifold 104. In this embodiment, the flow selector 120 is rotatable relative to the manifold 104, with the external end 124 of the flow selector 120 being shaped to provide a handle to enable a user to manually adjust the position of the flow selector 120.

The flow selector 120 has a plurality of apertures 130 of various sizes, that is, two or more different sizes, located on its periphery. The apertures 130 are divided into a plurality of spaced sets of apertures of different sizes. Each set of apertures comprises an inlet aperture for alignment with the gas inlet 106 to enable gas to enter the flow restrictor 120, and a plurality of outlet apertures for alignment with the gas outlets 110 to enable gas to exit the flow restrictor 120. In the position located in Figure 3, inlet aperture 132a of a first set of apertures is aligned with the gas inlet 106 and outlet apertures 134a, 136a, 138a of that first set are each aligned with a respective gas outlet 110. With a quarter turn of the flow selector 120 in an anti-clockwise direction, outlet apertures 134b, 136b, 138b of a second set of apertures each become aligned with a respective gas outlet 110, and the inlet aperture (not shown) of that second set becomes aligned with the gas inlet 106. With a quarter turn of the flow selector 120 in a clockwise direction, inlet aperture 132c of a third set of apertures becomes aligned with the gas inlet 106, and the outlet apertures (not shown) of that third set each become aligned with a respective gas outlet 110.

The respective sizes of the inlet and outlet apertures of each set determines the flow rate of the purge gas from the manifold 104 in each position of the flow selector 120. The outlet apertures of each set may have the same size, various (two or more) different sizes, or they may have respective different sizes depending on the purge gas flow rate requirement of each port 112 of the pumping arrangement 102. The handle may be indexed to enable the user to readily position the flow selector 120 so that a particular set of apertures is aligned with the gas inlet 106 and the gas outlet 110 as appropriate to the required flow rate of purge gas to the pumping arrangement 102.

The provision of these sets of apertures 130 on the periphery of the flow selector 120 can enable the flow rate of purge gas into the flow selector 120 from the gas inlet 106, and out from the flow selector 120 to each gas outlet 110, to be easily changed through appropriate positioning of the flow selector 120 relative to the manifold 104. For example, when the flow rate to the pumping arrangement is to be increased, the flow selector 120 can be moved to a position in which a large set of apertures is aligned with the gas inlet 106 and the gas outlets 110, and when the flow rate to the pumping arrangement is to be reduced, the flow selector 120 can be moved to a position in which a smaller set of apertures is aligned with the gas inlet 106 and the gas outlets 110.

In conjunction with this, in any position the flow rate of gas entering the manifold 104 can be monitored by measuring the pressure drop across the inlet aperture currently aligned with the gas inlet 106. For example, a first pressure measurement may be made in the gas inlet 106, and a second pressure measurement may be made in the gap 150 between the manifold 104 and the internal end 122 of the flow selector 120. By changing the size of the inlet aperture aligned with gas outlet 106 through rotation of the flow selector 120 so that, for example, the size of the inlet aperture is decreases with a decreasing flow of purge gas from the manifold, a measurable pressure difference across the inlet aperture can be obtained for each different flow rate of purge gas from the manifold 104. Furthermore, by having an inlet aperture of appropriate size for the required flow rate of gas from the manifold 104, throttling of the purge gas flow through the manifold 104 can be inhibited.

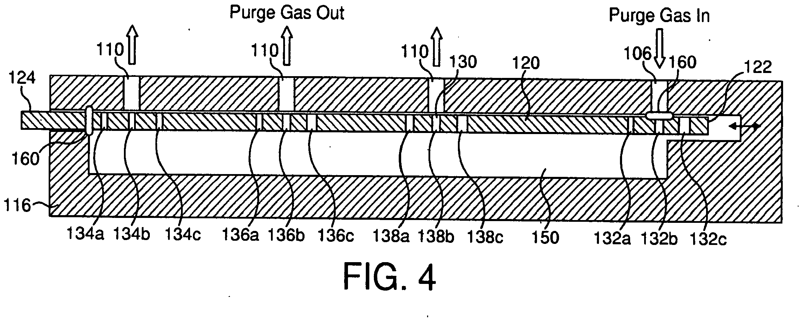

A second embodiment of the manifold 104 is illustrated in Figure 4. In this embodiment, the flow selector 120 is in the form of a plate located between the gas inlet 106 and the gas outlets 110, and is also partially within the manifold 104 so that one end 122 of the flow selector 120 is located within the manifold 104 and the other end 124 of the flow selector 120 is external of the manifold 104. Seals 160 are located about the gas inlet 106 and the flow selector 120 to isolate the gas inlet 106 and the gas outlets 100 externally of the flow selector 120 so that purge gas flows from the gas inlet 106 to the gas outlets 110 through the flow selector 120.

In this embodiment, the flow selector 120 is axially moveable relative to the manifold 104, with the external end 124 of the flow selector 120 providing a handle to enable a user to manually adjust the position of the flow selector 120.

As in the first embodiment, the flow selector 120 has a plurality of apertures 130 of various sizes, that is, two or more different sizes, located on its periphery. The apertures 130 are divided into a plurality of spaced sets of apertures of different sizes. Each set of apertures comprises an inlet aperture for alignment with the gas inlet 106 to enable gas to enter the manifold 104 from the gas inlet 106, and a plurality of outlet apertures for alignment with the gas outlets 110 to enable gas to exit the manifold 104. In the position located in Figure 4, inlet aperture 132b of a first set of apertures is aligned with the gas inlet 106 and outlet apertures 134b, 136b, 138b of that first set are each aligned with a respective gas outlet 110. With movement of the flow selector 120 to the right (as illustrated), inlet aperture 132a of a second set of apertures becomes aligned with the gas inlet 106, and the outlet apertures 134a, 136a, 138a of that second set each become aligned with a respective gas outlet 110. With movement of the flow selector 120 to the left (as illustrated), inlet aperture 132c of a third set of apertures becomes aligned with the gas inlet 106, and the outlet apertures 134c, 136c, 138c of that third set each become aligned with a respective gas outlet 110. As shown in Figure 4, the inlet apertures 132a, 132b, 132c have different sizes.

The respective sizes of the inlet and outlet apertures of each set determines the flow rate of the purge gas from the manifold 104 in each position of the flow selector 120. As in the first embodiment, the outlet apertures of each set may have the same size, various (two or more) different sizes, or they may have respective different sizes depending on the purge gas flow rate requirement of each port 112 of the pumping arrangement 102. The handle may be indexed to enable the user to readily position the flow selector 120 so that a particular set of apertures is aligned with the gas inlet 106 and the gas outlet 110 as appropriate to the required flow rate of purge gas to the pumping arrangement 102.

As with the first embodiment, the provision of these sets of apertures 130 on the periphery of the flow selector 120 can enable the flow rate of purge gas into the manifold 104 from the gas inlet 106, and out from the manifold 104 to each gas outlet 110, to be easily changed through appropriate positioning of the flow selector 120 relative to the manifold 104. For example, when the flow rate to the pumping arrangement is to be increased, the flow selector 120 can be moved to a position in which a large set of apertures is aligned with the gas inlet 106 and the gas outlets 110, and when the flow rate to the pumping arrangement is to be reduced, the flow selector 120 can be moved to a position in which a smaller set of apertures is aligned with the gas inlet 106 and the gas outlets 110.

As also with the first embodiment, in any position the flow rate of gas entering the manifold 104 can be monitored by measuring the pressure drop across the inlet aperture currently aligned with the gas inlet 106. For example, a first pressure measurement may be made in the gas inlet 106, and a second pressure measurement may be made in the gap 150 between the manifold 104 and the flow selector 120.

## Claims

1. Apparatus (100) for supplying a purge gas to a pumping arrangement (102), the apparatus comprising:
a manifold (104) having a gas inlet (106) and a plurality of gas outlets (110) each for supplying gas to a respective port (112) of the pumping arrangement; and
a flow selector (120) located between the inlet and the outlets, the flow selector comprising a plurality of spaced apertures (130) comprising a plurality of outlet apertures (134a, 134b, 134c, 136a, 136b, 136c, 138a, 138b, 138c) of various sizes which can be aligned with the gas outlets, the apparatus (100) being **characterized in that** the flow selector (120) further comprises a plurality of inlet apertures (132a, 132c) of various sizes which can be aligned with the gas inlet, the apertures being located so that the inlet apertures are spaced from the outlet apertures to form a plurality of aperture sets each comprising a said inlet aperture and a plurality of outlet apertures, the flow selector being moveable relative to the manifold from one position in which a first set of the apertures is aligned with the inlet and the outlets to another position in which a second set of the apertures is aligned with the inlet and the outlets to vary the flow rate of gas into and from the flow selector.

2. Apparatus according to Claim 1, wherein the outlet apertures are axially aligned.

3. Apparatus according to Claim 2, wherein the flow selector (120) is cylindrical and in a said set the inlet aperture (132a, 132c) is angularly spaced from the outlet apertures (134a, 134b, 134c, 136a, 136b, 136c, 138a, 138b, 138c).

4. Apparatus according to Claim 2 or Claim 3, wherein the gas inlet (106) is located on the opposite side of the manifold (104) to the gas outlets (110).

5. Apparatus according to Claim 2, wherein the flow selector (120) extends generally axially and in a said set the inlet aperture (132a, 132c) is axially spaced from the outlet apertures (134a, 134b, 134c, 136a, 136b, 136c, 138a, 138b, 138c).

6. Apparatus according to any of Claims 2 to 5, wherein the inlet apertures (132a, 132c) are located towards one end of the flow selector (120).

7. Apparatus according to any of Claims 2 to 6, wherein the outlet apertures (134a, 134b, 134c, 136a, 136b, 136c, 138a, 138b, 138c) of each set have various sizes.

8. Apparatus according to any of Claims 2 to 7, wherein the inlet apertures (132a, 132c) have different sizes.

9. Apparatus according to any of Claims 1 to 8, wherein the flow selector (120) is cylindrical and the first set of apertures is angularly spaced from the second set of apertures.

10. Apparatus according to any preceding claim, wherein the flow selector (120) is hollow, the apertures being located on the periphery thereof.

11. Apparatus according to Claim 10, wherein the flow selector (120) is tubular.

12. Apparatus according to any of Claims 1 to 9, wherein the flow selector (120) comprises a plate.

13. Apparatus according to any preceding claim, wherein one end (122) of the flow selector (120) is located inside the manifold (104), and the other end (124) of the flow selector is external of the manifold.

14. Apparatus according to Claim 13, wherein the external end (124) of the flow selector (120) provides a handle to enable a user to manually adjust the position of the flow selector.

## Patentansprüche

1. Einrichtung (100) zum Zuführen eines Spülgases zu einer Pumpenanordnung (102), wobei die Einrichtung aufweist:
einen Verteiler (104) mit einem Gaseinlaß (106) und einer Mehrzahl von Gasauslässen (110) jeweils zum Zuführen von Gas zu einem entsprechenden Anschluß (112) der Pumpenanordnung und
einen Strömungswähler (120), der zwischen dem Einlaß und den Auslässen angeordnet ist, wobei der Strömungswähler eine Mehrzahl von beabstandeten Öffnungen (130) umfasst, die eine Mehrzahl von Auslassöffnungen (134a, 134b, 134c, 136a, 136b, 136c, 138a, 138b, 138c) unterschiedlicher Größen aufweisen, die mit den Gasauslässen in Deckung gebracht werden können,
wobei die Einrichtung (100) **dadurch gekennzeichnet ist, dass** der Strömungswähler (120) weiter eine Mehrzahl von Einlassöffnungen (132a, 132c) unterschiedlicher Größen aufweist, die mit dem Gaseinlaß zur Deckung gebracht werden können, wobei die Öffnungen so angeordnet sind, dass die Einlassöffnungen von den Auslassöffnungen beabstandet sind, um eine Mehrzahl von Öffnungsgruppen zu bilden, die jeweils eine Einlassöffnung und eine Mehrzahl von Auslassöffnungen aufweisen, und wobei der Strömungswähler relativ zu dem Verteiler aus einer Position, in welcher eine erste Gruppe der Öffnungen mit dem Einlaß und den Auslässen fluchten, in eine andere Position bewegbar ist, in welcher eine zweite Gruppe von Öffnungen mit dem Einlaß und den Auslässen fluchtet, um die Strömungsrate von Gas in den und aus dem Strömungswähler zu variieren.

2. Einrichtung nach Anspruch 1, wobei die Auslassöffnungen axial fluchtend sind.

3. Einrichtung nach Anspruch 2, wobei der Strömungswähler (120) zylindrisch ist und in einer genannten Gruppe die Einlaßöffnung (132a, 132c) winkelmäßig von den Auslaßöffnungen (134a, 134b, 134c, 136a, 136b, 136c, 138a, 138b, 138c) beabstandet ist.

4. Einrichtung nach Anspruch 2 oder Anspruch 3, wobei der Gaseinlaß (106) auf der mit Bezug auf die Gasauslässe (110) entgegengesetzten Seite des Verteilers (104) angeordnet ist.

5. Einrichtung nach Anspruch 2, wobei der Strömungswähler (120) sich im allgemeinen axial erstreckt, und wobei in einer genannten Gruppe die Einlaßöffnung (132a, 132c) axial von den Auslassöffnungen (134a, 134b, 134c, 136a, 136b, 136c, 138a, 138b, 138c) beabstandet ist.

6. Einrichtung nach einem der Ansprüche 2 bis 5, wobei die Einlassöffnungen (132a, 132c) zu einem Ende des Stömungswählers (120) hin angeordnet sind.

7. Einrichtung nach einem der Ansprüche 2 bis 6, wobei die Auslassöffnungen (134a, 134b, 134c, 136a, 136b, 136c, 138a, 138b, 138c) jeder Gruppe verschiedene Größen haben.

8. Einrichtung nach einem der Ansprüche 2 bis 7, wobei die Einlassöffnungen (132a, 132c) unterschiedliche Größen haben.

9. Einrichtung nach einem der Ansprüche 1 bis 8, wobei der Strömungswähler (120) zylindrisch ist und die erste Gruppe von Öffnungen winkelmäßig beabstandet von der zweiten Gruppe von Öffnungen ist.

10. Einrichtung nach irgendeinem vorhergehenden Anspruch, wobei der Strömungswähler (120) hohl ist und die Öffnungen an dessen Peripherie angeordnet sind.

11. Einrichtung nach Anspruch 10, wobei der Strömungswähler (120) rohrförmig ist.

12. Einrichtung nach einem der Ansprüche 1 bis 9, wobei der Strömungswähler (120) eine Platte umfasst.

13. Einrichtung nach irgendeinem vorhergehenden Anspruch, wobei ein Ende (122) des Strömungswählers (120) innerhalb des Verteilers (104) angeordnet ist und das andere Ende (124) des Strömungswählers extern des Verteilers angeordnet ist.

14. Einrichtung nach Anspruch 13, wobei das externe Ende (124) des Strömungswählers (120) einen Handgriff bereitstellt, um einem Benutzer das manuelle Einstellen der Position des Strömungswählers zu ermöglichen

## Revendications

1. Dispositif (100) d'alimentation avec un gaz de purge d'un ensemble de pompage (102), le dispositif comprenant :
un collecteur (104) ayant une entrée (106) de gaz et une pluralité de sorties (110) de gaz fournissant chacune en gaz un orifice respectif (112) de l'ensemble de pompage ; et
un sélecteur de débit (120) situé entre l'entrée et les sorties, le sélecteur de débit comprenant une pluralité d'ouvertures espacées (130) comprenant une pluralité d'ouvertures de sortie (134a, 134b, 134c, 136a, 136b, 136c, 138a, 138b, 138c), de tailles variées, qui peuvent être alignées avec les sorties de gaz, le dispositif (100) étant ***caractérisé en ce que*** le sélecteur de débit (120) comprend en outre une pluralité d'ouvertures d'entrée (132a, 132c) de tailles variées qui peuvent être alignées avec l'entrée du gaz, les ouvertures étant situées de telle sorte que les ouvertures d'entrée soient espacées des ouvertures de sortie pour former une pluralité de jeux d'ouvertures comprenant chacun une dite ouverture d'entrée et une pluralité d'ouvertures de sortie, le sélecteur de débit étant mobile par rapport au collecteur, d'une position dans laquelle un premier jeu d'ouvertures est aligné avec l'entrée et les sorties, à une autre position dans laquelle un deuxième jeu d'ouvertures est aligné avec l'entrée et les sorties afin de modifier le débit du gaz entrant et sortant du sélecteur de débit.

2. Dispositif selon la revendication 1, dans lequel les ouvertures de sortie sont alignées axialement.

3. Dispositif selon la revendication 2, dans lequel le sélecteur de débit (120) est cylindrique et, dans un dit jeu, l'ouverture d'entrée (132a, 132c) est espacée angulairement des ouvertures de sortie (134a, 134b, 134c, 136a, 136b, 136c, 138a, 138b, 138c).

4. Dispositif selon la revendication 2 ou la revendication 3, dans lequel l'entrée (106) du gaz est située sur le côté du collecteur (103) opposé aux sorties (110) du gaz.

5. Dispositif selon la revendication 2, dans lequel le sélecteur de débit (120) s'étend axialement dans son ensemble, et dans un dit jeu, l'ouverture d'entrée (132a, 132c) est axialement espacée des ouvertures de sortie (134a, 134b, 134c, 136a, 136b, 136c, 138a, 138b, 138c).

6. Dispositif selon l'une quelconque des revendications 2 à 5, dans lequel les ouvertures d'entrée (132a, 132c) sont situées vers une extrémité du sélecteur de débit (120).

7. Dispositif selon l'une quelconque des revendications 2 à 6, dans lequel les ouvertures de sortie (134a, 134b, 134c, 136a, 136b, 136c, 138a, 138b, 138c) de chaque jeu ont des tailles différentes.

8. Dispositif selon l'une quelconque des revendications 2 à 7, dans lequel les ouvertures d'entrée (132a, 132c) ont des tailles différentes.

9. Dispositif selon l'une quelconque des revendications 1 à 8, dans lequel le sélecteur de débit (120) est cylindrique et le premier jeu d'ouvertures est espacé angulairement du deuxième jeu d'ouvertures.

10. Dispositif selon l'une quelconque des revendications précédentes, dans lequel le sélecteur de débit (120) est creux, les ouvertures étant situées sur sa périphérie.

11. Dispositif selon la revendication 10, dans lequel le sélecteur de débit (120) est tubulaire.

12. Dispositif selon l'une quelconque des revendications 1 à 9, dans lequel le sélecteur de débit (120) comprend une plaque.

13. Dispositif selon l'une quelconque des revendications précédentes, dans lequel une extrémité (122) du sélecteur de débit (120) est située à l'intérieur du collecteur (104), et l'autre extrémité (124) du sélecteur de débit est extérieure au collecteur.

14. Dispositif selon la revendication 13, dans lequel l'extrémité extérieure (124) du sélecteur de débit (120) possède une manette pour permettre à un utilisateur de régler manuellement la position du sélecteur de débit.
